# FASCICULE DE BREVET EUROPEEN

(11) **EP 4 081 044 B1**
(45) Date de publication et mention de la délivrance du brevet: **23.09.2026**
(21) Numéro de dépôt: 20851290.5
(22) Date de dépôt: 22.12.2020
(51) Int. Cl.: A23J 1/14

(54) **ISOLAT DE PROTEINE DE POIS A FAIBLE TENEUR EN LIPIDES**
LIPIDARMES ERBSENPROTEINISOLAT
LOW-LIPID PEA PROTEIN ISOLATE

(30) Priorité: 23.12.2019 FR 1915459
(43) Date de publication de la demande: 02.11.2022
(73) Titulaire: ROQUETTE FRERES, 62136 Lestrem (FR)
(72) Inventeur: CALMON, Lucile, 59800 LILLE (FR)
(74) Mandataire: Roquette IP International
(86) Numéro de dépôt international: PCT/FR2020/052598
(87) Numéro de publication internationale: WO 2021/130446

(56) Documents cités:
- FR-A1- 2 889 417
- FR-A1- 3 071 132
- US-A1- 2011 045 128
- ZHU DAN ET AL: "Removal of off-flavour-causing precursors in soy protein by concurrent treatment with phospholipase A2and cyclodextrins", FOOD CHEMISTRY, ELSEVIER LTD, NL, vol. 264, 9 May 2018 (2018-05-09), pages 319 - 325, XP085402647, ISSN: 0308-8146, DOI: 10.1016/J.FOODCHEM.2018.05.045
- AKSHAY ARORA ET AL: "Removal of soy protein-bound phospholipids by a combination of sonication, -cyclodextrin, and phospholipase Atreatments", FOOD CHEMISTRY, ELSEVIER LTD, NL, vol. 127, no. 3, 19 January 2011 (2011-01-19), pages 1007 - 1013, XP028176529, ISSN: 0308-8146, [retrieved on 20110126], DOI: 10.1016/J.FOODCHEM.2011.01.073

## Description

### Domaine technique

L'invention relève du domaine des protéines végétales, en particulier des isolats protéiques de pois ayant une faible teneur en lipides.

### Technique antérieure

Les besoins quotidiens humains en protéines sont compris entre 12 et 20% de la ration alimentaire. Ces protéines sont fournies aussi bien par des produits d'origine animale (viandes, poissons, œufs, produits laitiers) que par des produits d'origine végétale (céréales, légumineuses, algues).

Cependant, dans les pays industrialisés, les apports en protéines sont majoritairement sous la forme de protéines d'origine animale. Or, de nombreuses études démontrent qu'une consommation excessive de protéines d'origine animale au détriment des protéines végétales est une des causes d'augmentation de cancers et maladies cardio-vasculaires.

Par ailleurs, les protéines animales présentent beaucoup de désavantages, tant sur le plan de leur allergénicité, concernant notamment les protéines issues du lait ou des oeufs, que sur le plan environnemental en relation avec les méfaits de l'élevage intensif.

Ainsi, il existe une demande croissante des industriels pour des composés d'origine végétale possédant des propriétés nutritionnelles et fonctionnelles intéressantes sans pour autant présenter les inconvénients de composés d'origine animale.

Néanmoins, le remplacement des protéines animales par des protéines végétales n'est pas toujours aisé car leurs propriétés physiques et physico-chimiques sont différentes, et cela a un impact sur les qualités sensorielles des aliments dans lesquels sont incorporées ces protéines.

Depuis les années 70, les légumineuses à graines, dont en particulier le pois, se sont fortement développées en Europe, majoritairement en France, comme ressource protéique alternative aux protéines animales à destination de l'alimentation animale et humaine. Le pois contient environ 27 % en poids de matières protéiques. Le terme « pois » est ici considéré dans son acception la plus large et inclut en particulier toutes les variétés sauvages de « pois lisse » (« smooth pea »), et toutes les variétés mutantes de « pois lisse » et de « pois ridé » (« wrinkled pea »), et ce quelles que soient les utilisations auxquelles on destine généralement lesdites variétés (alimentation humaine, nutrition animale et/ou autres utilisations). Ces graines sont non-OGM au contraire du soja, et ne nécessitent pas de déhuilage solvanté.

Un inconvénient de certaines protéines végétales, en particulier des protéines de légumineuse, encore plus particulièrement des protéines de pois, est qu'elles ne sont pas dépourvues de goût. Elles peuvent donc amener des flaveurs désagréables (en anglais « off-flavors ») dans les aliments dans lesquels elles sont incorporées. Ces goûts sont fréquemment décrits par les consommateurs comme des goûts de légumineuses (en anglais « beany »), de pois ou une amertume.

Une solution connue à ce problème est de masquer ces flaveurs désagréables en introduisant des composés chimiques tels que des arômes pendant le procédé de fabrication. Néanmoins, cette solution n'est souvent pas satisfaisante car elle ne permet pas de masquer la flaveur désagréable mais seulement de la réduire faiblement. Un second inconvénient est que le procédé de fabrication des aliments est alors plus onéreux en raison de l'ajout d'ingrédients supplémentaires. Par ailleurs, de plus en plus de consommateurs se détournent des produits contenant des composés chimiques au profit d'une nourriture plus saine.

Une solution plus avantageuse est d'utiliser directement un isolat de protéines végétales ayant peu ou pas de flaveur désagréable. Quelques exemples de procédés permettant d'obtenir de tels isolats sont déjà décrits. Par exemple, la demande WO2015/071498 décrit un procédé d'extraction par broyage humide, combiné à une fermentation lactique, pour extraire un isolat de protéines de pois purifié. Un autre exemple dans la demande WO2017/120597 décrit un procédé de précipitation sous forme de sels, combiné à un lavage spécifique des protéines avec un grand volume d'une solution aqueuse à pH neutre. Néanmoins, ces procédés ne sont pas satisfaisants car ils résultent en des isolats protéiques présentant toujours un goût de pois et une amertume.

Les lipides étant les substrats de la lipoxygénase et des réactions d'oxydation menant à la formation de composés volatiles responsable des « off-flavors » chez la protéine de légumineuses, l'extraction des lipides pourrait constituer une méthode efficace pour produire des isolats protéiques dépourvus de ces « off-flavors » et/ou dont la flaveur serait plus stable lors du stockage, en particulier du à l'oxydation des lipides résiduels. En effet, il est décrit dans la littérature (Sessa and Rackis J. A.. OII Chemists'Soc 1979, 56, 262-271) que la cause principale du développement de ces « off-flavors » pendant la récolte, la transformation et le stockage est l'oxydation des acides gras insaturés, en particulier des acides linoléique et linolénique.

Parmi les voies étudiées pour l'extraction, figure l'utilisation de cyclodextrines qui sont des oligosaccharides cycliques composés de plusieurs unités de glucopyranose (C6H10O5) liées par une liaison α-(1,4). Les plus communes sont les α-cyclodextrines, β-cyclodextrines et γ-cyclodextrines constituées respectivement de 6, 7 et 8 glucopyranoses. Dans la littérature, l'utilisation de la β-cyclodextrine a été expérimentée pour éliminer les lipides et phospholipides résiduels des isolats protéiques de soja issus de farine délipidée. Les lipides étant les substrats de la lipoxygénase et des réactions d'oxydation menant à la formation de composés volatiles responsable des off-flavors chez les légumineuses, l'extraction des lipides par la β-cyclodextrine pourrait constituer une méthode efficace pour produire des isolats protéiques dépourvus de ces off-flavors. Dans ce domaine, on peut citer le document Zhu et al., Food Chemistry, 264 (2018), qui préconise d'utiliser une α-cyclodextrine, ainsi que les documents Akshay Arora et al., Food Chemistry, 127, n°3, 2011 et US20110045128 A1 qui préconisent d'utiliser un traitement ultrasons associé à l'utilisation de cyclodextrine.

Il est donc d'intérêt d'obtenir un isolat protéique de pois ayant une faible teneur en lipides.

### Description générale de l'invention

Selon un premier aspect de l'invention, il est proposé un isolat protéique de pois, caractérisé en ce qu'il contient entre 7 g et 9 g. préférablement entre 7,5 g et 8,5 g de lipides totaux pour 100 g de protéines.

Selon un autre aspect, il est proposé un procédé de préparation d'un isolat protéique selon l'invention, caractérisé en ce qu'il comprend les étapes suivantes :
1) mise en suspension de protéines de pois, dans de l'eau ;
2) ajustement du pH à 8,5;
3) chauffage à une température comprise entre 40 et 50 °C, préférentiellement 45°C;
4) ajout d'une solution aqueuse comprenant un mélange de phospholipases et β-cyclodextrines caractérisée en ce que le ratio entre l'activité phospholipase A2 et la quantité de β-cyclodextrines, exprimé en unités d'activité PLA2 par g de β-cyclodextrines, est compris entre 10 et 100, préférentiellement entre 20 et 80, encore plus préférentiellement entre 25 et 50;
5) agitation pendant un temps compris entre 160 et 200 min, préférentiellement 180 minutes;
6) ajustement du pH à 4,5 ;
7) chauffage à une température comprise entre 50 et 70 °C, préférentiellement 60°C pendant 8 à 12 minutes, préférentiellement 10 minutes;
8) centrifugation suivie optionnellement d'un lavage dans de l'eau déminée, puis d'une seconde centrifugation ;
9) mise en suspension du culot protéique dans de l'eau, puis ajustement du pH à 7;
10) séchage de l'isolat protéique obtenu.

**Selon** un dernier aspect de l'invention, il est proposé les utilisations industrielles, en particulier alimentaires animales et humaines, de l'isolat protéique de pois selon l'invention.

L'invention sera mieux comprise grâce à la description détaillée ci-dessous.

### Description détaillée de l'invention

Selon un premier aspect de l'invention, il est donc proposé un isolat protéique de pois, caractérisé en ce qu'il contient entre 7 g et 9 g, préférablement entre 7,5 g et 8,5 g de lipides totaux pour 100 g de protéines.

**Le** terme «isolat protéique » doit se comprendre dans la présente demande comme une composition ayant une teneur en protéines supérieure à 70%, préférentiellement supérieure à 80%, encore plus préférentiellement supérieure à 85%, ce pourcentage s'entendant sur la matière sèche de la dite composition. La teneur en protéine se calcule à l'aide de toute méthodologie bien connue de l'homme du métier. En particulier, on réalise un dosage de l'azote total par Kjeldahl qu'on multiplie par le coefficient 6,25. La dite composition comporte donc des protéines, macromolécules formées d'une ou de plusieurs chaînes polypeptidiques constituées de l'enchaînement de résidus d'acides aminés liés entre eux par des liaisons peptidiques. Dans le cadre particulier des protéines de pois, la présente invention concerne plus particulièrement les globulines (environ 50-60% des protéines du pois). Les globulines de pois se subdivisent principalement en trois sous-familles : les légumines, les vicilines et les convicilines.

Par « légumineuse », on comprendra dans la présente demande la famille de plantes dicotylédones de l'ordre des *Fabales.* C'est l'une des plus importantes familles de plantes à fleurs, la troisième après les *Orchidaceae* et les *Asteraceae* par le nombre d'espèces. Elle compte environ 765 genres regroupant plus de 19 500 espèces. Plusieurs légumineuses sont d'importantes plantes cultivées parmi lesquelles le soja, les haricots, les pois, le pois chiche, la féverole, l'arachide, la lentille cultivée, la luzerne cultivée, différents trèfles, les fèves, le caroubier, la réglisse, le lupin.

Le terme « pois » dans la présente demande inclut les variétés de pois appartenant au genre Pisum et plus particulièrement aux espèces sativum et aestivum. Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches » Proceedings of the Symposium of the Industrial Biochemistry and Biotechnology Group of the Biochemical Society, 1996, pp. 77-87.

Le terme « lipides totaux » dans la présente demande est défini comme l'ensemble des molécules lipidiques sans distinction. Ils comprennent ainsi les triglycérides, les phospholipides, les acides gras libres. Le dosage des lipides est réalisé par hydrolyse acide, suivi d'une extraction à l'hexane et d'un dosage spécifique des lipides ainsi extraits, préférentiellement par chromatographie phase gazeuse. La méthode préférée est décrite ci-dessous.

La la légumineuse de l'isolat protéique est le pois.

De manière préférentielle, l'isolat protéique selon l'invention est caractérisé en ce que sa teneur en acide linoléique est diminuée de 20% à 30%, préférentiellement 25%, par rapport à la teneur présente dans la graine de légumineuse.

Par « acide linoléique », on entend selon l'invention l'acide gras polyinsaturé oméga-6 correspondant à l'acide tout-cis-Δ9,12 C18:2 n-6. Sa formule semi-développée est : H₃C-(CH₂)₄-CH=CH-CH₂-CH=CH-(CH₂)₇-COOH.

Comme décrit par exemple dans (Sessa and Rackis 1977) "La principale cause du développement de « off-flavors » pendant la récolte, la manufacture et le stockage est l'oxydation des acides gras polyinsaturés (p.e. les acides linoléiques et linoléniques).". Comme il sera exemplifié plus bas, il est remarquable de voir que grâce à l'invention, la teneur en ces acides est considérablement réduite.

L'isolat protéique peut présenter l'avantage de ne pas contenir de traces de solvant organique, c'est-à-dire contenant moins de 100 ppm de solvant par rapport à la masse sèche d'isolat. Préférentiellement, l'isolat contient préférentiellement moins de 10 ppm par rapport à la masse sèche d'isolat, tout préférentiellement n'en comprend pas du tout. Par solvant organique, on entend un solvant fait de molécules comprenant au moins un atome de carbone. Au contraire, l'isolat peut comprendre des solvants inorganiques, typiquement l'eau. C'est un avantage par rapport aux isolats fabriqués par un procédé comprenant une étape d'extraction des lipides par un solvant organique tel que l'hexane.

L'isolat protéique de l'invention peut présenter de bonnes propriétés fonctionnelles, par une bonne rétention en huile ou en eau.

Selon un autre aspect, il est proposé un procédé permettant de produire un isolat protéique selon l'invention caractérisé en ce qu'il comprend les étapes suivantes :
1) mise en suspension de protéines de pois,, dans de l'eau ;
2) ajustement du pH à 8,5;
3) chauffage à une température comprise entre 40 et 50 °C, préférentiellement 45°C;
4) ajout d'une solution aqueuse comprenant un mélange de phospholipases et β-cyclodextrines caractérisée en ce que le ratio entre l'activité phospholipase A2 et la quantité de β-cyclodextrines, exprimé en unités d'activité PLA2 par g de β-cyclodextrines, est compris entre 10 et 100, préférentiellement entre 20 et 80, encore plus préférentiellement entre 25 et 50;
5) agitation pendant un temps compris entre 160 et 200 min, préférentiellement 180 minutes;
6) ajustement du pH à 4,5 ;
7) chauffage à une température comprise entre 50 et 70 °C, préférentiellement 60°C pendant 8 à 12 minutes, préférentiellement 10 minutes;
8) centrifugation suivie optionnellement d'un lavage dans de l'eau déminée, puis d'une seconde centrifugation ;
9) mise en suspension du culot protéique dans de l'eau, puis ajustement du pH à 7;
10) séchage de l'isolat protéique obtenu.

De manière préférée, l'étape 1 est réalisée en mettant en suspension des protéines de légumineuses caractérisées en ce qu'elles sont composées à plus de 50% de globulines, préférentiellement plus de 70%, encore plus préférentiellement plus de 80%. On peut facilement obtenir de telles globulines en broyant la graine en farine, puis en mettant celle-ci en suspension dans de l'eau et en séparant les fibres & l'amidon à l'aide d'hydrocyclones et de centrifugeuses. La solution surnageante enrichie en protéines va ensuite être rectifiée au pH isoélectrique (environ 4,5) et subir un chauffage contrôlé, afin de séparer les globulines dans un coagulât qui flocule. Un tel procédé est décrit dans le brevet EP1400537 de la présente demanderesse.

Dans les étapes 1 et 8, par « eau » on entend tout type d'eau convenant à l'extraction de protéine en vue de consommation alimentaire. De manière préférée, on utilisera de l'eau potable, décarbonatée ou déminéralisée.

Concernant l'étape 4, le ratio entre l'activité phospholipase A2 et la quantité de β-cyclodextrines, exprimé en unités d'activité PLA2 par g de β-cyclodextrines, est compris entre 10 et 100, préférentiellement entre 20 et 80, encore plus préférentiellement entre 25 et 50.

De manière préférée, la quantité de β-cyclodextrines est calculée par rapport à la quantité de lipides totaux dans l'isolat de protéines. Cette quantité varie entre 0,04 et 0,8 g/g de lipides. La quantité de phospholipase est calculée afin d'être en conformité avec le ratio décrit ci-dessus.

Les phospholipases sont des enzymes qui ont pour action d'hydrolyser les phospholipides. Une phospholipase pouvant être utilisée dans le cadre du procédé selon l'invention est une phospholipase de type A2, notamment la PLA2 Nagase 10P/R produite par Nagase ChemteX Corporation, et qui dérive de *Streptomyces violaceoruber* NBRC 15146.

L'activité PLA2 est mesurée avec de la lécithine de soja comme substrat. Celle-ci est placée à 37°C et pH 8.0, et l'activité est mesurée à l'aide par exemple d'un kit enzymatique NEFA-C Test Wako (Wako Pure Chemical Industries, Ltd.). Une unité d'activité d'enzyme correspond à l'hydrolyse d'1 µmol d'acide gras en une minute.

L'enzyme PLA2 Nagase 10P/R titre ainsi 100,000 U/g.

Les cyclodextrines sont des oligosaccharides cycliques composés de plusieurs unités de glucopyranose (C₆H₁₀O₅) liées par une liaison α-(1,4). Les plus communes sont les α-cyclodextrines, β-cyclodextrines et γ-cyclodextrines constituées respectivement de 6, 7 et 8 glucopyranoses. L'un des principaux intérêts des cyclodextrines est leur capacité à former des complexes d'inclusions avec des composés divers du fait de leur structure en « cylindre conique ».

Selon l'invention, le séchage de la composition peut se faire par toute méthode connue en soi, préférentiellement par lyophilisation, passage sur tambour sécheur ou atomisation (« spray-drying »), notamment par lyophilisation.

Un avantage du procédé est qu'il peut ne pas comprendre d'étape de traitement ultrasons. Une étape de traitement ultrasons, connue en soi, consiste une étape d'application d'ultrasons à de la matière (farine, isolat, etc...) lors du procédé.

Selon un dernier aspect de l'invention, il est proposé les utilisations industrielles, en particulier alimentaires animales et humaines, de l'isolat protéique de pois selon l'invention.

L'invention sera mieux comprise à l'aide des exemples non-limitatifs ci-dessous.

### Exemples

On utilise pour ces exemples des pois jaunes dont la teneur en lipides totaux de la farine est de 2,3% de la matière sèche. L'acide linoléique représente 53,3% des acides gras totaux de cette farine.

La BCD (Bétacyclodextrine) utilisée est le Kleptose^{®} de la société Roquette.

La phospholipase utilisée est la Nagase PLA2 10P/R, diluée à une concentration de 1% poids/poids avec de l'eau déminéralisée. La solution contient également 0,5% de NaCl et 0,1% de CaCl2.

### Exemple 1a : Production d'un isolat protéique de légumineuse selon l'invention à partir de globulines préalablement extraites

Les globulines sont extraites selon une extraction classique. On utilise dans le présent exemple des graines de pois jaune. Après décorticage des fibres externes sur broyeur à marteaux, on broie des graines de pois afin d'obtenir une farine. Celle-ci est ensuite mise à tremper dans de l'eau à la concentration finale de 16,5 % en poids de matière sèche par rapport au poids de ladite suspension, à un pH de 6,5, pendant 30 minutes à température ambiante. La suspension de farine à 25 % en poids de matière sèche est alors introduite dans une batterie d'hydrocyclones, séparant une phase légère constituée du mélange protéines, fibres internes (pulpes) et solubles et une phase lourde, renfermant l'amidon. La phase légère en sortie d'hydrocyclones est ensuite amenée à une teneur en matière sèche de 11,2 % par rapport au poids de ladite suspension. On procède à la séparation des fibres internes par passage sur des décanteurs centrifuges de type WESPHALIA. La phase légère en sortie de décanteur centrifuge renferme un mélange de protéines et de solubles, tandis que la phase lourde renferme les fibres de pois. On procède à la coagulation des protéines à leur point isoélectrique par ajustement de la phase légère de sortie de décanteur centrifuge à un pH de 4,6 et chauffage à 70°C de cette solution pendant 4 min. Après coagulation des protéines, on récupère un floc protéique composé majoritairement de globulines.

Le floc protéique est remis en suspension dans de l'eau déminéralisée puis est introduit dans le réacteur où sont ajoutés les réactifs, βCD et PLA2, dans des conditions spécifiques de température (45°C) et de pH (8,5). Les quantités de βCD et de PLA2 sont calculées par rapport à la quantité résiduelle de lipides, dans un dosage respectivement égal à 0,04 g de βCD par g de lipides et 0,002 g d'une solution à 1% de phospholipase Nagase PLA2 10P/R par g de lipides. Après 180 min de réaction, la solution est chauffée à 60°C pendant 10 min afin d'inhiber la PLA2. Puis la solution traitée est floculée 10 min à 60°C à pH 4,5 avant d'être centrifugée 2 fois à 8000g pendant 10 min pour éliminer les complexes βCD. Enfin les globulines sont remises en suspension dans de l'eau déminéralisée et le pH est remonté à 7 avant lyophilisation.

### Exemple 1b : Production d'un isolat protéique de légumineuse à partir de farine

Cet exemple varie de l'exemple 1a en ce que le point d'injection de la βCD et de la phospholipase est situé en amont, lors de l'étape de suspension de la farine de pois.

On utilise dans le présent exemple des graines de pois jaune. Après décorticage des fibres externes sur broyeur à marteaux, on broie des graines de pois afin d'obtenir une farine. Celle-ci est ensuite mise à tremper dans un réacteur, avec de l'eau à la concentration finale de 16,5 % en poids de matière sèche par rapport au poids de ladite suspension. On introduit dans le réacteur les réactifs, βCD et PLA2, et on place la solution ainsi obtenue dans des conditions spécifiques de température (45°C) et de pH (8,5). Les quantités de βCD et de PLA2 sont calculées par rapport à la quantité résiduelle de lipides, dans un dosage respectivement égal à 0,04 g de βCD par g de lipides et 0,002 g d'une solution à 1% de phospholipase Nagase PLA2 10P/R par g de lipides. Après 180 min de réaction, la solution est chauffée à 60°C pendant 10 min afin d'inhiber la PLA2. La suspension de farine est alors introduite dans une batterie d'hydrocyclones, séparant une phase légère constituée du mélange protéines, fibres internes (pulpes) et solubles et une phase lourde, renfermant l'amidon. La phase légère en sortie d'hydrocyclones est ensuite amenée à une teneur en matière sèche de 11,2 % par rapport au poids de ladite suspension. On procède à la séparation des fibres internes par passage sur des décanteurs centrifuges de type WESPHALIA. La phase légère en sortie de décanteur centrifuge renferme un mélange de protéines et de solubles, tandis que la phase lourde renferme les fibres de pois. On procède à la coagulation des protéines à leur point isoélectrique par ajustement de la phase légère de sortie de décanteur centrifuge à un pH de 4,6 et chauffage à 70°C de cette solution pendant 4 min. Après coagulation des protéines, on récupère un floc protéique composé majoritairement de globulines.

### Exemple 1c : Production d'un isolat protéique de légumineuse selon l'invention à partir de globulines préalablement extraites, avec un ratio BCD/Lipase hors invention

Le but de cet exemple est de démontrer l'importance du ratio βCD/lipase

**On** utilise dans le présent exemple des graines de pois jaune. Après décorticage des fibres externes sur broyeur à marteaux, on broie des graines de pois afin d'obtenir une farine. Celle-ci est ensuite mise à tremper dans de l'eau à la concentration finale de 16,5 % en poids de matière sèche par rapport au poids de ladite suspension, à un pH de 6,5, pendant 30 minutes à température ambiante. La suspension de farine à 25 % en poids de matière sèche est alors introduite dans une batterie d'hydrocyclones, séparant une phase légère constituée du mélange protéines, fibres internes (pulpes) et solubles et une phase lourde, renfermant l'amidon. La phase légère en sortie d'hydrocyclones est ensuite amenée à une teneur en matière sèche de 11,2 % par rapport au poids de ladite suspension. On procède à la séparation des fibres internes par passage sur des décanteurs centrifuges de type WESPHALIA. La phase légère en sortie de décanteur centrifuge renferme un mélange de protéines et de solubles, tandis que la phase lourde renferme les fibres de pois. On procède à la coagulation des protéines à leur point isoélectrique par ajustement de la phase légère de sortie de décanteur centrifuge à un pH de 4,6 et chauffage à 70°C de cette solution pendant 4 min. Après coagulation des protéines, on récupère un floc protéique composé majoritairement de globulines,.

Le floc protéique est remis en suspension dans de l'eau déminéralisée puis est introduit dans le réacteur où sont ajoutés les réactifs, βCD et PLA2, dans des conditions spécifiques de température (45°C) et de pH (8,5). Les quantités de βCD et de PLA2 sont calculées par rapport à la quantité résiduelle de lipides, dans un dosage respectivement égal à 0,71 g de βCD par g de lipides et 0,002 g d'une solution à 1% de phospholipase Nagase PLA2 10P/R par g de lipides. Après 180 min de réaction, la solution est chauffée à 60°C pendant 10 min afin d'inhiber la PLA2. Puis la solution traitée est floculée 10 min à 60°C à pH 4,5 avant d'être centrifugée 2 fois à 8000g pendant 10 min pour éliminer les complexes βCD. Enfin les globulines sont remises en suspension dans de l'eau déminéralisée et le pH est remonté à 7 avant lyophilisation.

### Exemple 2 : Mesure des lipides totaux dans différents isolats selon l'invention

On analyse les lipides totaux ainsi que la teneur en différents acides gras présents.

Le protocole pour analyser les lipides totaux est le suivant :
Le protocole pour analyser la teneur en acide linoléique est le suivant :
Ces deux valeurs sont exprimées par rapport à la teneur en protéines afin de comparer les différents échantillons. La teneur en protéines est obtenue en dosant la teneur en azote de l'échantillon, qui sera multipliée par le coefficient 6,25.

Le tableau ci-dessous résume et compare les différents essais :

**[Tableau 1]**

| | Lipides totaux (en g/100g protéines sèches) | Réduction de la teneur en lipides (%) | Acide linoléique (en g/100g protéines sèches) | Réduction de la teneur en acide linoléique (%) |
|---|---|---|---|---|
| Pois | 12 | - | 3,8 | - |
| Exemple 1a | 7,3 | 39% | 2,9 | 23,6% |
| Exemple 1b | 10 | 16% | 3,7 | 2,6% |
| Exemple 1c | 9,3 | 20% | 3,6 | 5,2% |

Ces essais montrent à la fois l'importance du point d'injection de la βCD et de la phospholipase, ainsi que du ratio βCD/lipase. En effet, seul l'exemple 1a selon l'invention permet d'obtenir un isolat protéique ayant :
- une forte réduction de la teneur en lipides conduisant à un taux de moins de 9 g de lipides totaux pour 100 g de protéines ;
- une forte réduction de la teneur en acide linoléique de plus de 20% (23,6 %).

## Revendications

1. Isolat protéique de légumineuse, **caractérisé en ce qu'**il contient entre 7 g et 9 g, préférablement entre 7,5 g et 8,5 g de lipides totaux pour 100 g de protéines, dans lequel la légumineuse est le pois.

2. Isolat protéique selon la revendication 1 **caractérisé en ce que** sa teneur en acide linoléique est diminuée de 20% à 30%, préférentiellement 25%, par rapport à la teneur présente dans la graine de légumineuse.

3. Isolat protéique selon l'une des revendications 1 ou 2 **caractérisé en ce qu'**il ne contient pas de solvant organique.

4. Procédé de préparation d'un isolat protéique selon les revendications 1 à 3 **caractérisé en ce qu'**il comprend les étapes suivantes :
1) mise en suspension de protéines de pois dans de l'eau ;
2) ajustement du pH à 8,5;
3) chauffage à une température comprise entre 40 et 50 °C, préférentiellement 45°C;
4) ajout d'une solution aqueuse comprenant un mélange de phospholipases et β-cyclodextrines **caractérisée en ce que** le ratio entre l'activité phospholipase A2 et la quantité de β-cyclodextrines, exprimé en unités d'activité PLA2 par g de β-cyclodextrines, est compris entre 10 et 100, préférentiellement entre 20 et 80, encore plus préférentiellement entre 25 et 50;
5) agitation pendant un temps compris entre 160 et 200 min, préférentiellement 180 minutes;
6) ajustement du pH à 4,5 ;
7) chauffage à une température comprise entre 50 et 70 °C, préférentiellement 60°C pendant 8 à 12 minutes, préférentiellement 10 minutes;
8) centrifugation suivie optionnellement d'un lavage dans de l'eau déminée, puis d'une seconde centrifugation ;
9) mise en suspension du culot protéique dans de l'eau, puis ajustement du pH à 7;
10) séchage de l'isolat protéique obtenu.

5. Procédé selon la revendication 4, **caractérisé en ce que** la quantité de β-cyclodextrines mise en œuvre à l'étape 4 est comprise entre 0,04 et 0,8 g/g de lipides totaux dans l'isolat de protéines.

6. Procédé selon l'une des revendications 4 ou 5, **caractérisé en ce que** les protéines de légumineuses mises en suspension à l'étape 1 sont composées de plus de 50% de globulines, préférentiellement plus de 70%, encore plus préférentiellement plus de 80%.

7. Procédé selon l'une des revendications 4 à 6 **caractérisé en ce qu'**il ne comprend pas d'étape de traitement ultrasons.

8. Utilisation de l'isolat protéique selon les revendications 1 à 3 pour l'alimentation humaine ou animale.

## Patentansprüche

1. Leguminosenproteinisolat, **dadurch gekennzeichnet, dass** es pro 100 g Protein insgesamt zwischen 7 g und 9 g, vorzugsweise zwischen 7,5 g und 8,5 g, Lipide enthält, wobei es sich bei der Leguminose um die Erbse handelt.

2. Proteinisolat nach Anspruch 1, **dadurch gekennzeichnet, dass** sein Gehalt an Linolsäure im Vergleich zu dem in dem Leguminosensamen vorhandenen Gehalt um 20 % bis 30 %, vorzugsweise 25 %, geringer ist.

3. Proteinisolat nach einem der Ansprüche 1 oder 2,
**dadurch gekennzeichnet, dass** es kein organisches Lösungsmittel enthält.

4. Verfahren zur Herstellung eines Proteinisolats nach den Ansprüchen 1 bis 3, **dadurch gekennzeichnet, dass** es die folgenden Schritte umfasst:
1) Suspendieren von Erbsenproteinen in Wasser;
2) Einstellen des pH-Werts auf 8,5;
3) Erwärmen auf eine Temperatur zwischen 40 °C und 50 °C, vorzugsweise auf 45 °C;
4) Zugeben einer wässrigen Lösung, umfassend ein Gemisch aus Phospholipasen und β-Cyclodextrinen, **dadurch gekennzeichnet, dass** das in Einheiten der PLA2-Aktivität pro g β-Cyclodextrin ausgedrückte Verhältnis der Phospholipase-A2-Aktivität zur Menge an β-Cyclodextrinen zwischen 10 und 100, vorzugsweise zwischen 20 und 80, noch mehr bevorzugt zwischen 25 und 50, liegt;
5) zwischen 160 und 200 Minuten, vorzugsweise 180 Minuten, langes Rühren;
6) Einstellen des pH-Werts auf 4,5;
7) 8 bis 12 Minuten, vorzugsweise 10 Minuten, langes Erwärmen auf eine Temperatur zwischen 50 °C und 70 °C, vorzugsweise auf 60 °C;
8) Zentrifugieren, gegebenenfalls gefolgt von Waschen in demineralisiertem Wasser und sodann gefolgt von zweitem Zentrifugieren;
9) Suspendieren des Proteinpellets in Wasser, anschließendes Einstellen des pH-Werts auf 7;
10) Trocknen des erhaltenen Proteinisolats.

5. Verfahren nach Anspruch 4, **dadurch gekennzeichnet, dass** die in Schritt 4 eingesetzte Menge an β-Cyclodextrinen zwischen 0,04 g und 0,8 g/g im Proteinisolat insgesamt enthaltener Lipide liegt.

6. Verfahren nach einem der Ansprüche 4 oder 5,
**dadurch gekennzeichnet, dass** die in Schritt 1 suspendierten Leguminosenproteine zu mehr als 50 %, vorzugsweise mehr als 70 %, noch mehr bevorzugt mehr als 80 %, aus Globulinen bestehen.

7. Verfahren nach einem der Ansprüche 4 bis 6,
**dadurch gekennzeichnet, dass** es keinen Schritt des Behandelns mit Ultraschall umfasst.

8. Verwendung des Proteinisolats nach den Ansprüchen 1 bis 3 für die menschliche oder tierische Ernährung.

## Claims

1. A leguminous plant protein isolate, **characterized in that** it contains between 7 g and 9 g, preferably between 7.5 g and 8.5 g of total lipids per 100 g of proteins, the leguminous plant being pea.

2. The protein isolate according to claim 1, **characterized in that** its linoleic acid content is reduced by 20% to 30%, preferentially 25%, relative to the content present in the leguminous plant seed.

3. The protein isolate according to one of claims 1 or 2,
**characterized in that** it does not contain organic solvent.

4. A method for preparing a protein isolate according to claims 1 to 3, **characterized in that** it comprises the following steps:
1) suspending pea proteins in water;
2) adjusting the pH to 8.5;
3) heating to a temperature between 40 and 50°C, preferentially 45°C;
4) adding an aqueous solution comprising a mixture of phospholipases and β-cyclodextrins, **characterized in that** the ratio between the phospholipase A2 activity and the amount of β-cyclodextrins, expressed in units of PLA2 activity per g of β-cyclodextrins, is between 10 and 100, preferentially between 20 and 80, even more preferentially between 25 and 50;
5) stirring for a time between 160 and 200 min, preferentially 180 minutes;
6) adjusting the pH to 4.5;
7) heating to a temperature between 50 and 70°C, preferentially 60°C for 8 to 12 minutes, preferentially 10 minutes;
8) centrifugating then optionally washing in demineralized water, then centrifugating a second time;
9) suspending the protein pellet in water, then adjusting the pH to 7;
10) drying the obtained protein isolate.

5. The method according to claim 4, **characterized in that** the amount of β-cyclodextrins used in step 4 is between 0.04 and 0.8 g/g total lipids in the protein isolate.

6. The method according to one of claims 4 or 5, **characterized in that** the leguminous plant proteins suspended in step 1 are composed of more than 50% globulins, preferentially more than 70%, even more preferentially more than 80%.

7. The method according to one of claims 4 to 6, **characterized in that** it does not comprise an ultrasonic treatment step.

8. Use of the protein isolate according to claims 1 to 3 for human or animal nutrition.
